# EUROPEAN PATENT APPLICATION

(11) **EP 0 763 414 A1**
(43) Date of publication of application: **19.03.1997**
(21) Application number: 96306117.1
(22) Date of filing: 21.08.1996
(51) Int. Cl.: B29C 45/17

(54) **Gas injection nozzle for use in gas-assisted plastics injection**

(30) Priority: 14.09.1995 US 528085
(71) Applicant: UNITED TECHNOLOGIES AUTOMOTIVE SYSTEMS, INC., Detroit, MI 48216 (US)
(72) Inventor: Souder, Blair Vincent, Willington, Connecticut 06279 (US); Bak, Joseph V., Eastford, Connecticut 06242 (US)
(74) Representative: Gilding, Martin John

(57) **Abstract**

An apparatus (10) is provided for use in producing a plastic product via gas-assisted injection molding. A supply of plastic material is introduced into a mold space (15) defined within a mold body (12) and a pressurized gas is introduced into the plastic material to create a gas filled cavity within the plastic material. The pressurized gas is introduced through a gas injection apparatus (40) including a gas injection nozzle (50) having a nozzle body having an inlet (52) for receiving a supply of pressurized gas, an outlet (54) for discharging the pressurized gas, and a gas flow passage (55) connecting the inlet (52) and outlet (54) in fluid communication. The outlet (54) is configured as an annular or one or more circumferential slots having a substantially uniform width.

## Description

### Background of the Invention

The present invention relates generally to gas-assisted injection molding of plastic materials and, more particularly, to an improved gas injection nozzle for introducing a pressurized gas into a molten mass of plastic material filling a mold cavity to produce a relatively thin walled plastic article.

Gas-assisted injection molding is commonly used to produce hollow, thin walled plastic articles, such as for example television cabinets, furniture, automotive trim components, automotive instrument panels and other plastic articles. In a typical, conventional gas-assisted injection molding process, a mass of molten plastic material is introduced into a mold space and, after a desired amount of plastic material has been introduced into the mold space, a pressurized gas which will not chemically react with the plastic material, most commonly nitrogen gas, is separately introduced at one or more selected locations into the plastic material so as to force the plastic material to the sides of the mold space and against the surface of the walls of the mold defining the mold space. The gas pressure is maintained within the gas containing cavity to hold the plastic material positively against the surface of the mold walls as the plastic material solidifies and cools until the resultant molding can itself sustain the form dictated by the mold surface. At the end of the molding cycle, the gas pressure within the gas containing cavity is relieved before the mold is opened by venting the pressurized gas from the gas cavity. Typically, the pressurized gas is vented by allowing the gas to flow back through the same passageway through which the gas was introduced into the mold space.

One apparatus used in producing plastic articles via gas-assisted injection molding is disclosed in U.S. Patent 4,740,150. In the disclosed apparatus, a screw ram is provided as means for introducing molten thermoplastic material through a nozzle assembly to a hot runner manifold and thence into a mold space defined within a mold assembly having upper and lower mold halves. The walls of the mold halves facing the mold space define the desired outer surface of the resultant molded product. The plastics injection nozzle assembly is provided with a shut-off valve which in its closed position prevents any backflow of plastic material into the barrel of the screw ram. A gas injection nozzle assembly is provided as means for introducing a pressurized gas, typically nitrogen gas, into the plastics material filling the mold space whereby the gas creates a gas containing cavity in the plastics material and forces the plastic material to flow throughout the mold space and against the walls defining the mold space.

The gas injection nozzle assembly disclosed in U.S. Patent 4,740,150, is axially moveable within a channel passing through one of the mold halves to a port opening to the mold space. The gas injection nozzle assembly is positioned forwardly to seat in the port at the beginning of the molding process and maintained so positioned while the desired amount of pressurized gas is introduced into the plastics material within the mold to form a gas filled cavity within the plastics material. The nozzle assembly is thereafter maintained in its forwarded position while the plastic material cools to a desired temperature, thereby ensuring that the gas pressurized is maintained at the desired level during the initial curing of the plastics material. When it is desired to relieve the gas pressure within the gas filled cavity, the gas injection nozzle assembly is retracted away from the port thereby permitting the gas to vent from the gas filled cavity by flowing through the channel via the annular space around the gas injection nozzle assembly.

The gas injection nozzle assembly disclosed in U.S. Patent 4,740,150 comprises an elongated nozzle body defining a central, cylindrical gas flow passage having an inlet for receiving a supply of pressurized gas and a cylindrical outlet opening into the mold space. In such a conventional gas injection nozzle assemblies, the gas cylindrical flow passage has an inside diameter typically ranging from about 0.04 to about 0.15 inches. At the downstream end of the gas flow passage of the gas injection nozzle assembly is a non-return valve which functions to prevent backflow of molten plastics material from the mold space into the gas flow passage after introduction of pressurized gas into the mold space ceases during the molding process. The disclosed non-return valve comprises a ball which is loosely held captive in a nozzle cap threaded to the outlet end of the gas injection nozzle assembly. When the gas is vented from the mold space at the completion of the molding process, the ball seats against the outlet of the gas flow passage thereby closing off the outlet of the gas flow passage. It is also known in the art to use a spring biased plug as a non-return valve in such a gas injection nozzle assembly.

In such conventional gas injection nozzle assemblies, the non-return valve is required in order to prevent molten plastic material from entering the gas flow passage via the gas outlet. If molten plastic material did enter the gas flow passage, it would solidify as it cooled and plug the gas flow passage. A gas injection nozzle assembly with a plugged gas flow passage must be removed from service and cleaned. Additionally, in such conventional gas injection nozzle assemblies, it is common practice to heat the gas injection nozzle assembly during operation so that any molten plastic material that may enter the gas flow passage remains molten rather than solidifying.

### SUMMARY OF THE INVENTION

It is an object of the present invention to provide an apparatus useful for producing an injection molding including a gas injection nozzle assembly which is inherently resistant to plugging.

It is also an object of the present invention to provide a gas injection nozzle assembly that does not require a non-return valve to preclude molten plastic material from entering the gas flow passage of the gas injection nozzle assembly.

It is a further object of the present invention to provide a gas injection nozzle assembly that does not require heating to preclude plugging of the gas flow passage of the gas injection nozzle assembly.

An apparatus is provided for use in producing a plastic product via gas-assisted injection molding. The apparatus comprises a plastics injection apparatus for introducing a supply of plastic material into a mold space defined within a mold body and a gas injection apparatus for introducing a pressurized gas into the plastic material within the cavity in the plastic material. The gas injection apparatus includes a gas injection nozzle having a nozzle body having an inlet for receiving a supply of pressurized gas, an outlet for discharging the pressurized gas, and a gas flow passage connecting the inlet and outlet in fluid communication. In accordance with the present invention, the nozzle outlet comprises an annular slot having a width ranging from about 0.0005 inches to about .005 inches (about 12.5 micrometers to 130 micrometers). Most advantageously, the nozzle outlet has a width of about 0.0015 inches (about 38 micrometers).

### BRIEF DESCRIPTION OF THE DRAWINGS

These and other features and advantages of the present invention may be better understood through consideration of the following detailed description of a certain preferred embodiment of the invention with reference to drawings wherein:
Figure 1 is a sectional side elevational view of an injection molding apparatus provided with a gas injection apparatus;
Figure 2 is a side elevation view, partly in section, of a portion of the injection molding apparatus of Figure 1 showing the gas injection apparatus of the present invention in its forward position for introducing pressurized gas into the mold cavity;
Figure 3 is a side elevation view, partly in section, of a portion of the injection molding apparatus of Figure 1 showing the gas injection apparatus in its retracted position for venting pressurized gas from the mold cavity;
Figure 4 is an enlarged side elevational of the outlet portion of the gas injection nozzle of the present invention;
Figure 5 is a cross-sectional view of the gas injection nozzle of the present invention taken along line 5-5 of Figure 4;
Figure 6 is a cross-sectional view of one embodiment of the tip portion of the gas injection nozzle of the present invention taken along line 6-6 of Figure 4;
Figure 7 is a cross-sectional view of another embodiment of the tip portion of the gas injection nozzle of the present invention; and
Figure 8 is a cross-sectional plan view taken along line 8-8 of Figure 7.

### DETAILED DESCRIPTION OF A PREFERRED EMBODIMENT

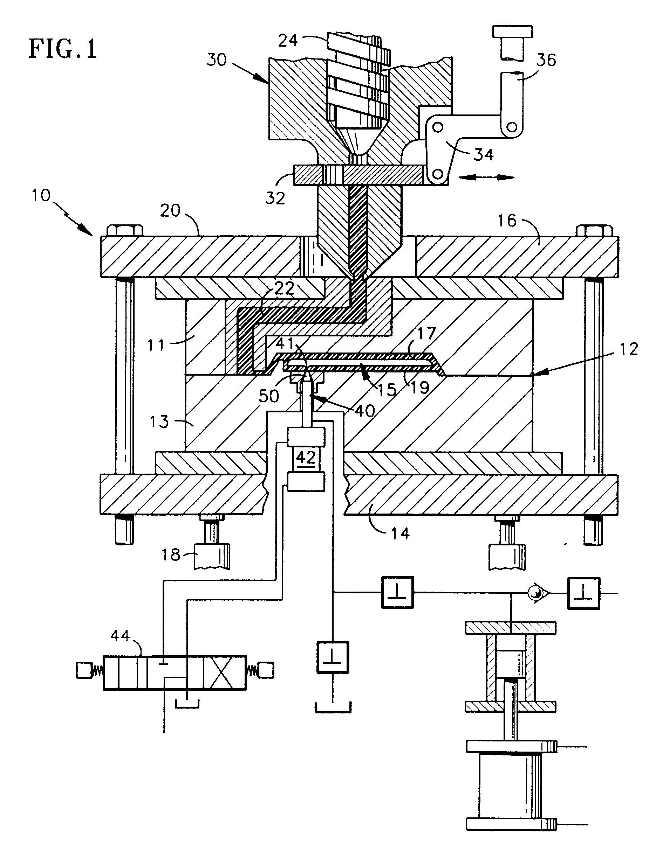

Referring now to Figure 1, there is depicted an injection molding machine 10 which is exemplary of the type of gas-assisted injection molding apparatus to which the present invention applies. The molding apparatus 10 includes a mold body 12 having an upper part 11 and a lower part 13 defining a mold cavity 15 therebetween. The interior surfaces 17, 19, respectively, of the lower and upper parts 11, 13 define the desired shape and texture of the exterior surface of the resultant molded product. The mold parts 11, 13 are mounted between a lower platen 14 and an upper platen 16 of a conventional mold press 20 and are movable by a hydraulic ram 18 so as to selectively open and close the mold body 12 as desired during the molding process.

In the depicted embodiment, a hot or cold runner manifold 22 is provided in the upper mold part 13 defining a flow passage leading to one or more desired entry points to the mold cavity 15. Apparatus, such as for example a screw ram 24, is provided for introducing molten thermoplastic material through plastic material injection nozzle assembly 30 to the hot runner manifold 22 and thence into the mold space 15. The plastic material injection nozzle assembly 30 includes a shut-off valve means 32, such as for example a slide valve actuated by a bell crank 34 connected to a hydraulic device 36, as depicted, or any type of conventional valve which is operational in its closed position to shutoff the flow of plastics material into the nozzle assembly 30 and prevent backflow of plastics material upon the subsequent introduction of pressurized gas into the molten material supplied to the mold space 15.

The injection molding apparatus 10 further includes a gas injection apparatus 40 for introducing a pressurized gas into the plastic material received within the mold space 15 so as to create a gas containing cavity in the plastic material. The preferred pressurized gas is nitrogen gas, but other gases which do not react with the plastic material or the various parts of the molding apparatus may be utilized. The gas injection apparatus 40 is operatively connected to a hydraulic or pneumatic apparatus 42 so as to be selectively retractable from a forward position to a retracted position. The gas injection apparatus 40 includes a gas injection nozzle 50 having a gas inlet 52 at its upstream end through which a supply of pressurized gas to be injected into the plastic material is received, a gas outlet 54 at its downstream end through which the pressurized gas is discharged, and a gas flow passage 55 connecting the nozzle gas inlet 52 with the nozzle gas outlet 54.

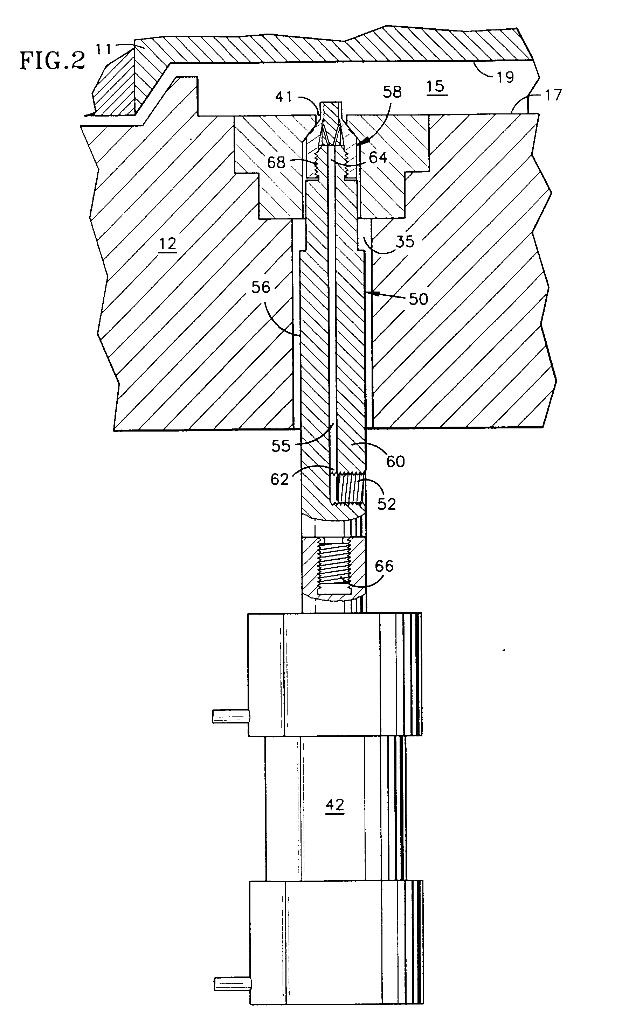

In the depicted embodiment, the gas injection apparatus 40 is located with respect to port 41 opening in the wall of the molding apparatus 10 so as to introduce the pressurized gas directly into the mold space 15. Alternatively, the gas injection apparatus 40 could be located so as to introduce the pressurized gas through the hot or cold runner 22 upstream of the mold space 15 or even through the same opening through which the plastic material was introduced into the mold cavity. As depicted in Figures 1 through 3, the gas injection apparatus 40 is axially moveable within a channel 35 that passes through the lower part 13 of the mold body and opens to port 41 opening to the mold space 15. Prior to commencement of the molding operation, the gas injection apparatus 40 is positioned, by activation of the piston 42 under the control of valve 44, at its forward position whereat the gas injection nozzle 50 is seated in registration with the port 41 opening to the mold space 15 such that the tip portion of the gas injection nozzle 50 extends into the mold space 15 whereby the gas outlet 54 will be embedded in the plastic material when the plastic material is received into the mold space. With the gas injection apparatus positioned in its forward position as depicted in Figures 1 and 2, pressurized gas may be injected through the gas injection nozzle 50 into the plastic material received within the mold space 15 and encompassing the outlet tip portion of the gas injection nozzle 50 whereby a gas filled cavity is created within the plastic material received within the mold space 15. The gas injection apparatus 40 is thereafter maintained in its forward position while the plastic material cools to a desired temperature, thereby ensuring that the gas pressurized is maintained at the desired level during the initial curing of the plastics material.

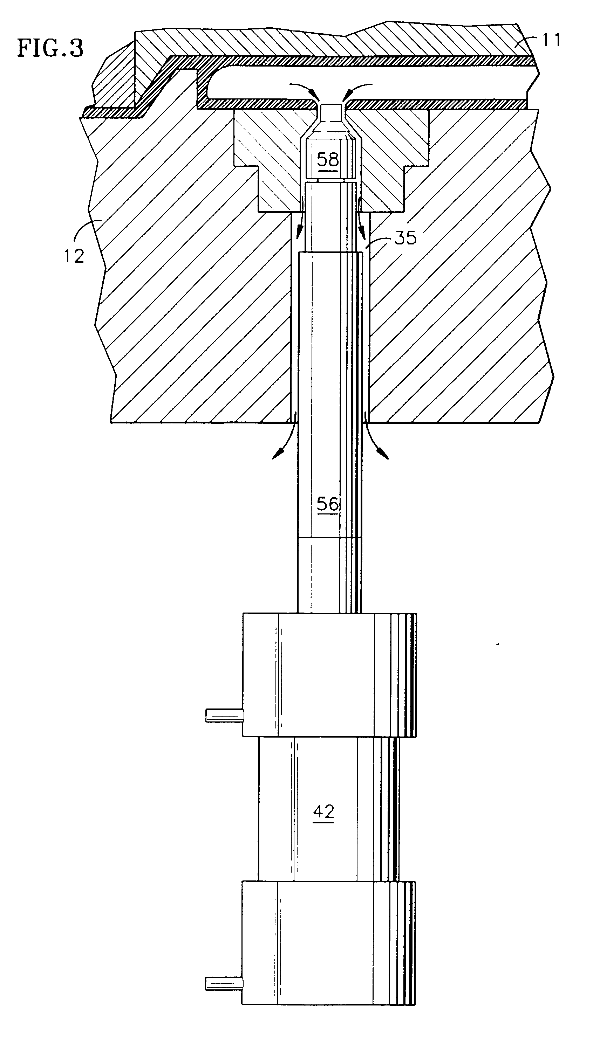

When it is desired to relieve the gas pressure within the gas filled cavity, the gas injection apparatus 40 may be retracted away from the port 41 by operation of the piston 42 under the control of the control valve 44 as in conventional prior art practice. With the gas injection apparatus 40 at its retracted position as depicted in Figure 3, the port 41 is open to the channel 34 thereby permitting the gas to vent from the gas filled cavity by flowing through the channel 35 via the annular space around the gas injection apparatus 40, as is common practice when using conventional gas injection nozzles. However, when using the gas injection nozzle of the present invention, it is not necessary to retract the gas injection apparatus 40 away from the port 41 in order to vent gas from the mold cavity. Rather, because of the anti-clogging characteristics of the gas injection nozzle 50 of the present invention, the gas injection apparatus 40 may be maintained in position in the port 41 while the gas is vented back through the gas flow passages of the gas injection nozzle 50 itself, rather than through an annular passage about the outside of the gas injection nozzle.

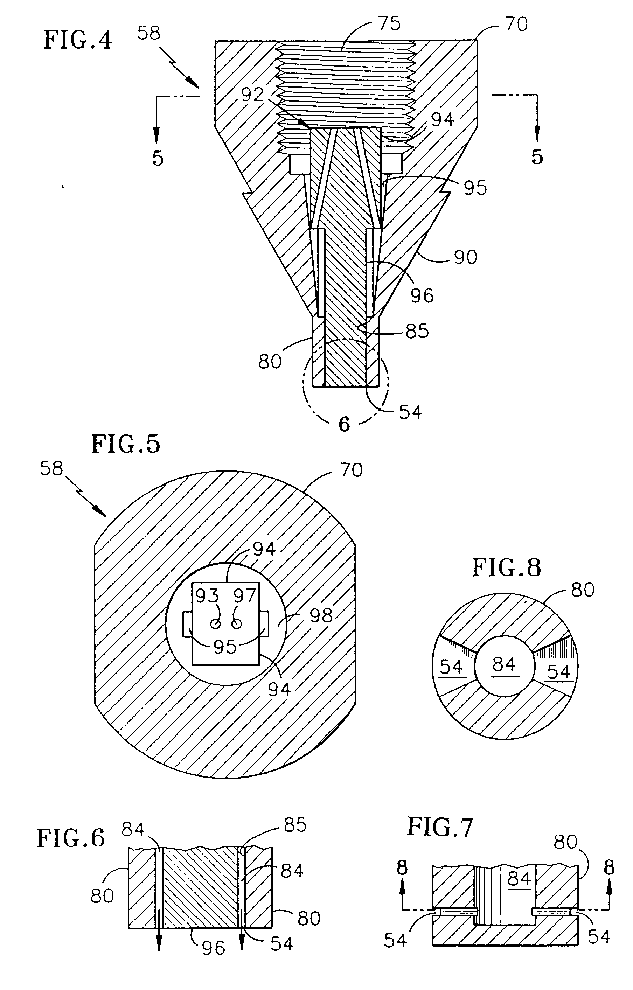

Referring now to Figures 2 - 7, the gas injection apparatus 40 of the present invention includes a gas injection nozzle 50 having a gas outlet 54 at its discharge end that comprises a slot having a width ranging from about 0.0005 inches to about 0.005 inches (about 12.5 micrometers to about 130 micrometers), and most advantageously having a substantially uniform width of about 0.0015 inches (about 38 micrometers). The width of the outlet slot 54 is measured radially across the slot. The outlet slot 54 may comprise an annular slot facing axially as depicted in Figure 6 or one or more slots facing circumferentially as depicted in Figure 7. Although the annular outlet slot 54 illustrated in Figure 6 is preferably a circular slot, as depicted, the annular outlet slot 54 may also be configured as an elliptical slot or any other configuration providing a generally uniform annular slot.

The gas injection nozzle 50 advantageously comprises a nozzle body 56 and an end cap 58. In the depicted embodiment, the nozzle body 56 comprises an elongated cylindrical member 60, termed hereafter as the nozzle shank, having a first threaded end 66 which is mounted to the piston 42 and a second threaded end 68 to which the nozzle end cap 58 is mounted. A cylindrical bore 65 extends axially through the nozzle shank 60 to form a gas flow passageway extending from an inlet passage 62 to a cylindrical discharge outlet 64. The inlet passage 62 opens to the nozzle gas inlet 52 provided in the wall of the nozzle shank 60 for receiving the pressurized gas to be injected into the mold space.

In the embodiment of the gas injection nozzle depicted in Figures 4 and 5, the nozzle end cap 58 has a generally cylindrical base portion 70, a generally cylindrical tip portion 80, and a generally conical transition portion 90 extending therebetween. A central cylindrical bore 75, which is internally threaded for a portion of its extent for mounting to the threaded end 68 of the nozzle shank 60, extends through the base portion 70 and terminates in the transition portion 90, thereby defining a flow passageway extending axially through the base portion 70 and into the transition portion 90. When mounted to the nozzle shank 60, the flow passageway defined by the central bore 75 opens at its upstream end to the discharge outlet 64 of the flow passageway defined by the central bore 65 of the nozzle shank 60. The transition portion 90 of the nozzle end cap 58 has a central channel that defines a passageway 95 opening at its upstream end to the flow passageway defined by the central bore 75 and extending axially through the transition portion 90. The cylindrical tip portion 80 of the nozzle end cap 58 has a central cylindrical bore extending therethrough and opening at its upstream end to the flow passageway of the channel 95 of the transition portion 90 of the nozzle end cap 58. In combination, the flow passageways defined respectively by the bore 75, the channel 95 and bore 85 of the nozzle end cap 58, in combination with the passageway defined by the central bore 65 of the nozzle shank 60, form the nozzle flow passageway 55 of the gas injection nozzle 50 through which the pressurized gas is injected into and vented from the plastic material received within the mold space 15. An elongated cylindrical member 96 is coaxially disposed within the cylindrical channel 95 provided in the transition portion 90 of the nozzle end cap 58 whereby an axially elongated gas flow passage 84 in the form of an annular axially extending channel formed between the outer surface of the cylindrical member 96 and inner surface of the central bore 85 of the tip portion 80 of the nozzle end cap. In this embodiment of the gas injection nozzle 50 of the present invention, the annular gas flow channel 84 simply terminates as the annular slot thereby forming an axially facing, annular outlet 54 for the gas injection nozzle 50 as depicted in Figure 6. In this embodiment, the gas is injected into the mold cavity in a substantially axial direction.

The elongated cylindrical member 96 may be supported from an insert member 92 having a rectangular parallelpiped body 94 that is supported on shelf means 94 provided within the channel 95. The elongated cylindrical member 96 extends axially in a downstream direction from the body 94 through the channel 95 and coaxially through the central bore 85 of the nozzle end cap. The insert member 92 is provided with gas flow conduits 93 and 97 extending therethrough. The gas flow conduits 93 and 97 are open at their upstream ends to receive a portion of the pressured gas passing through the nozzle gas flow passage 55 and are open at their downstream ends to discharge into the downstream portion of the channel 95 and thence from into and through the annular gas flow channel 84 to discharge through the gas outlet 54.

In another embodiment of the gas injection nozzle 50, the cylindrical member 96 is eliminated and the cylindrical tip portion 80 of the nozzle end cap is closed at its distal end. In this embodiment, the gas flow passage 84 is formed by drilling an axially extending central bore from the inside such that the bore does not extend all the way through the nozzle tip. As depicted in Figures 7 and 8, the gas outlet 54 comprises at least one slot formed in and extending through the wall of the tip portion 80. Each outlet slot 54 opens to the gas flow passage 84 and extends only partially about the circumference of the tip portion 80. Thus, the gas is injected into the mold cavity 15 in a particular desired direction, rather than merely radially. Although shown in Figure 7 as radially oriented slots, if desired, the slots may be formed so as to extend through the wall of the nozzle tip portion 80 at an acute angle with the nozzle axis whereby the gas may be injected into the mold cavity at any angle between a substantially radial direction and a substantially axial direction.

In accordance with the invention, the nozzle outlet slot or slots 54, whether configured as an axially facing, annular slot as depicted in Figure 6, or configured as one or more radially facing, circumferentially extending slots as depicted in Figure 7, each outlet slot 54 has a width, and preferably a substantially uniform width, as measured across the slot, ranging from about 0.0005 inches to about 0.0015 inches (about 12.5 micrometers to about 130 micrometers), and most advantageously, a substantially uniform width of about 0.0015 inches (about 38 micrometers). It has been shown through testing that by controlling the width of the slot outlet so as to fall within the specified range, that the backflow of plastic material into the nozzle gas flow passageway is precluded without the incorporation of any form of check valve or shut off valve into the gas injection nozzle as required in conventional prior art gas injection nozzles.

In general terms, the process of gas-assisted injection molding to which the present invention relates is the same as conventional gas-assisted injection molding processes, such as for example the processes described in U.S. Patent No. 4,740,150 or in U.S. Patent No. 4,824,732, with the exception of the particular manner in which the pressurized gas is injected into the molten plastic material. The method of the present invention is characterized by introducing the pressurized gas into the plastic material by means of a gas injection nozzle having an annular gas outlet having a width lying within the heretofore specified range, and preferably having a substantially uniform width of about 0.0015 inches (about 38 micrometers). By introducing the pressurized gas through this restricted opening, the backflow of plastic material into the gas flow passageway of the gas injection nozzle is precluded without the incorporation of any form of check valve or shut off valve into the gas injection nozzle as required in conventional prior art gas injection nozzles.

The specific mechanisms and techniques which have been described are merely illustrative of one application of the principles of the invention. For instance, the specific physical configuration of the elements shown in the drawings are merely illustrative of the particular embodiment depicted. Variations of such configurations and other modifications may be made to the apparatus and methods described herein without departing from the spirit and scope of the present invention.

## Claims

1. Apparatus for use in producing an injection molding of plastic material within a mold space defined by a mold body, comprising:
a plastic material injection apparatus for introducing a supply of molten plastic material into the mold space through an opening in the mold body; and
a gas injection apparatus for introducing a pressurized gas into the plastic material received within the mold space whereby the gas creates a gas containing cavity in the plastic material, the gas injection apparatus including a gas injection nozzle having a nozzle body having an inlet for receiving a supply of pressurized gas, an outlet for discharging the pressurized gas, and a gas flow passage connecting the inlet and the outlet in flow communication, the outlet being a slot having a width ranging from about 0.0005 inches to about 0.005 inches.

2. An apparatus as recited in claim 1 wherein said outlet comprises a slot having a width of about 0.0015 inches.

3. An apparatus as recited in claim 1 wherein said outlet comprises an axially facing, annular slot.

4. An apparatus as recited in claim 3 wherein said outlet comprises an axially facing, annular slot having a width of about 0.0015 inches.

5. An apparatus as recited in claim 1 wherein said outlet comprises a radially facing, circumferentially extending slot.

6. An apparatus as recited in claim 5 wherein said outlet comprises a radially facing, circumferentially extending slot having a width of about 0.0015 inches.

7. A gas injection nozzle for introducing a pressurized gas into a molten plastic material received within a mold space defined within a mold body of an injection molding apparatus, comprising a nozzle body having an inlet for receiving a supply of pressurized gas, an outlet for discharging the pressurized gas, and a gas flow passage connecting the inlet and the outlet in fluid flow communication, the outlet being a slot having a width ranging from about 0.0005 inches to about 0.005 inches.

8. A gas injection nozzle as recited in claim 7 wherein the outlet of said nozzle comprises a slot having a width of about 0.0015 inches.

9. A gas injection nozzle as recited in claim 7 wherein said outlet comprises an axially facing, annular slot.

10. A gas injection nozzle as recited in claim 9 wherein said outlet comprises an axially facing, annular slot having a width of about 0.0015 inches.

11. A gas injection nozzle as recited in claim 7 wherein said outlet comprises a radially facing, circumferentially extending slot.

12. An apparatus as recited in claim 11 wherein said outlet comprises a radially facing, circumferentially extending slot having a width of about 0.0015 inches.

13. A method of producing an injection molding of plastic material within a mold space defined by a mold body, comprising introducing a supply of plastic material through a first opening into the mold space and introducing a pressurized gas into the plastic material received within the mold space whereby the gas creates a gas containing cavity in the plastic material, characterized by introducing the pressurized gas by means of a gas injection nozzle having a gas outlet comprising a slot having a width ranging from about 0.0005 inches to about 0.005 inches.

14. A method as recited in claim 13 wherein the outlet of said nozzle comprises a slot having a width of about 0.0015 inches.

15. A method as recited in claim 13 wherein said outlet comprises an axially facing, annular slot.

16. A method as recited in claim 15 wherein said outlet comprises an axially facing, annular slot having a width of about 0.0015 inches.

17. A method as recited in claim 13 wherein said outlet comprises a radially facing, circumferentially extending slot.

18. A method as recited in claim 17 wherein said outlet comprises a radially facing, circumferentially extending slot having a width of about 0.0015 inches.
